# EUROPEAN PATENT APPLICATION

(11) **EP 3 677 491 A1**
(43) Date of publication of application: **08.07.2020**
(21) Application number: 18849578.2
(22) Date of filing: 03.08.2018
(51) Int. Cl.: B62H 3/08

(54) **BICYCLE LOCKING AND PARKING APPARATUS**

(30) Priority: 01.09.2017 CN 201710784110
(71) Applicant: Guangzhou Mingxi Network Technology Co., Ltd., Guangzhou, Guangdong 510530 (CN)
(72) Inventor: ZHANG, Jianguo, Guangzhou Guangdong 510530 (CN)
(74) Representative: HGF
(86) International application number: PCT/CN2018/098408
(87) International publication number: WO 2019/042077

(57) **Abstract**

Disclosed is a bicycle locking and parking device that includes a parking base and a vertical post provided with a locking device and configured to lock a bicycle wheel. A front end of the parking base is rotatably connected to a turning guide block, the turning guide block being provided with a first groove configured for supporting the bicycle wheel and orienting the bicycle wheel towards the locking device. The bicycle wheel is pushed into the first groove in the turning guide block, when the bicycle wheel is precisely oriented towards a locking opening of the locking device under the guidance of the first groove. Then the bicycle wheel is further pushed when the turning guide block turns about the parking base and guides the bicycle wheel to move to the locking device to get locked. During the whole process, the bicycle wheel is supported in the first groove where no shake happens, thereby easily achieving precise guidance without the need of manual adjustments.

## Description

### TECHNICAL FIELD

This invention relates to a bicycle parking assisting device, and in particular, to a bicycle locking and parking device.

### BACKGROUND

With the increasing popularity of public bicycle rentals, devices for parking and locking bicycle are also emerging.

For the time being, there are many kinds of bicycle locking and parking devices on the market, these devices generally lock and fix the wheels of the bicycles by means of a dock with built-in lock, However, these devices more or less have the following problems. Though a guide groove is used to guide the bicycle, the guide groove is designed relatively wide in general. Which leads to the problem that although the guide groove is adapted to be compatible with wheels of different widths and allow them to smoothly advance in the guide groove, it results in an unsatisfactory effect of guiding the wheels because of the gap present between the wheel and the guide groove. As a consequence, manual operation is still needed to help to accurately push the wheel into the locking device to get locked.

### SUMMARY

The technical problem to be solved in the present invention is to provide a bicycle locking and parking device which can provide precise guidance.

The technical solution for solving the above-mentioned technical problem is a bicycle locking and parking device, which includes a parking base and a vertical post provided with a locking device and configured to lock a bicycle wheel, where a front end of the parking base is rotatably connected to a turning guide block, the turning guide block being provided with a first groove configured for supporting the bicycle wheel and orienting the bicycle wheel towards the locking device.

Further, an opening width of the first groove is gradually decreased from top to bottom.

Further, the first groove has a V-shaped cross section.

Further, the first groove is a circular-arc-shaped groove.

Further, a circle of which the circular-arc-shaped groove is a part has a radius that is less than that of the bicycle wheel, and a side surface of a single side of the bicycle wheel and a side wall of a single side of the circular-arc-shaped groove are in close contact with each other at two places.

Further, a plurality of anti-slip strips are transversely arranged in the first groove and are spaced apart from each other.

Further, the parking base is provided with a second groove configured for accommodating the turning guide block and the bicycle wheel.

Further, a bottom of the turning guide block is transversely provided with a through hole, and two side walls of a front end of the second groove are transversely provided with a rotational shaft that passes through the through hole, and the turning guide block is operative to turn about the rotational shaft.

Further, a rear end of the second groove is transversely provided with a barrier belt configured for checking the bicycle wheel, and an upper portion of the barrier belt is provided with a V-shaped recess.

Further, the front end of the parking base is connected to an guide bridge provided with a third groove, where the third groove has a center line that is coplanar with a center line of the first groove, the bicycle wheel is capable of being pushed into the first groove via the third groove, an arc-shaped hook is provided at an end of the guide bridge, the front end of the parking base is provided with an arc-shaped channel fitted with the arc-shaped hook, and an end of the arc-shaped hook is embedded in the arc-shaped channel to prevent the guide bridge from free detach.

Beneficial effects are as follows. The bicycle wheel is pushed into the first groove in the turning guide block, when the bicycle wheel is precisely oriented towards a locking opening of the locking device under the guidance of the first groove. Then the bicycle wheel is further pushed when the turning guide block turns about the parking base and guides the bicycle wheel to move to the locking device to get locked. During the whole process, the bicycle wheel is supported in the first groove where no shake happens, thereby easily achieving precise guidance without the need of manual adjustments.

### BRIEF DESCRIPTION OF DRAWINGS

Hereinafter the present invention will be further described in connection with the drawings and embodiments.
FIG. 1 is an overall schematic diagram illustrating the combination of a turning guide block, a parking base, and a vertical post in accordance with an embodiment of the present invention.
FIG. 2 is a schematic diagram illustrating the structure of the turning guide block in accordance with an embodiment of the present invention.
FIG. 3 is an overall schematic diagram illustrating the combination of the turning guide block, the parking base, the vertical post, and a guide bridge in accordance with an embodiment of the present invention.
FIG. 4 is an overall schematic diagram illustrating a pair of guide rollers fixed above a locking device in accordance with an embodiment of the present invention.
FIG. 5 is a schematic diagram illustrating the fitting relationship between the guide bridge and the parking base in accordance with an embodiment of the present invention.
FIG. 6 is a schematic diagram illustrating the state in which a bicycle is parked in a parking device in accordance with an embodiment of the present invention.
FIG. 7 is a schematic diagram illustrating the state in which the bicycle is partially pulled out of the parking device in accordance with an embodiment of the present invention.

### DETAILED DESCRIPTION

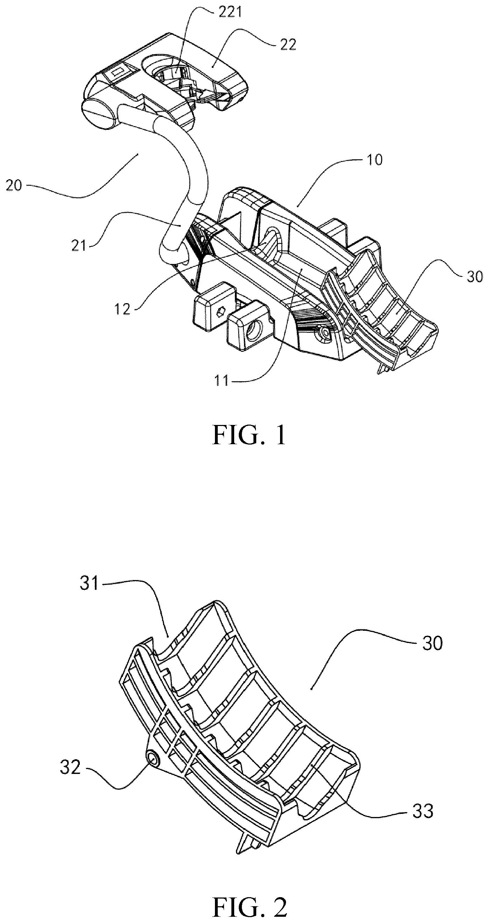

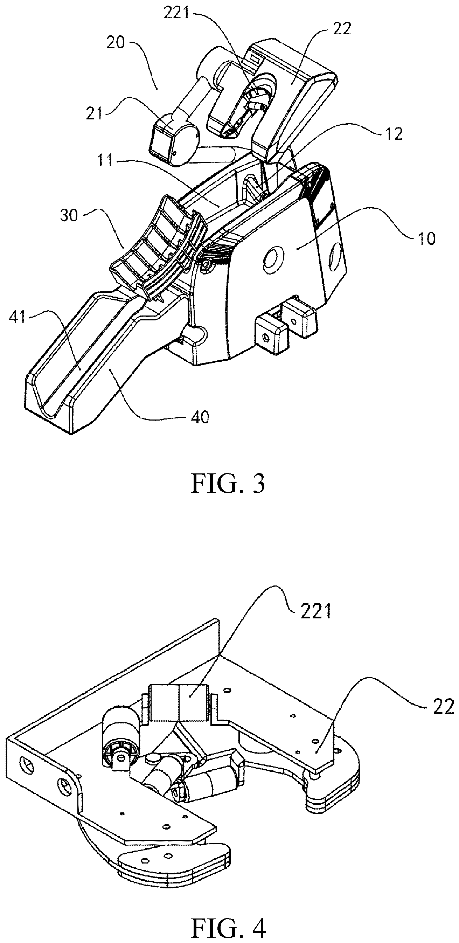

With reference to FIGS.1 to 7, a bicycle locking and parking device in an embodiment of the present invention includes a parking base 10 and a vertical post 20 provided with a locking device 22 and configured to lock a bicycle wheel, where a front end of the parking base 10 is rotatably connected to a turning guide block 30, which is provided with a first groove 31 configured for supporting the bicycle wheel and orienting the bicycle wheel towards the locking device 22, and an opening width of the first groove 31 is gradually decreased from top to bottom. Typically, a cross section of the first groove 31 is V-shaped, which may meet the needs of bicycle wheels of different sizes and make the bicycle wheel and two sides of the first groove 31 closely contact with each other without a gap.

Typically, the first groove 31 is a circular-arc-shaped groove, a radius of a circle of which the circular-arc-shaped groove is a part is less than that of the bicycle wheel, and a side surface of a single side of the bicycle wheel and a side wall of a single side of the circular-arc-shaped groove are in close contact with each other at two places. Due to the relatively large radius of the bicycle wheel, when the bicycle wheel is pushed into the circular-arc-shaped groove, it is sure that one side surface of a single side of the bicycle wheel and the circular-arc-shaped groove are in close contact with each other at two places, and the bicycle wheel is completely restricted in the circular-arc-shaped groove via close contact on four places of two sides to ensure that the bicycle wheel does not shake at all in the circular-arc-shaped groove.

Typically, a plurality of anti-slip strips 33 may be transversely arranged in the first groove 31 and are spaced apart from each other. The anti-slip strips 33 is convex relative to an inner wall of the first groove 31, and when the bicycle wheel is pushed into the first groove 31, a side surface of the bicycle wheel is in close contact with the two anti-slip strips 33. Since the plurality of anti-slip strips 33 are convex relative to the inner wall of the first groove 31 and have a transverse line shape, the bicycle wheel is in line-to-surface contact with the plurality of anti-slip strips 33, which is different from surface-to-surface contact between the bicycle wheel and the inner wall of the first groove 31. Therefore, there is no excess constraint, achieving precise guidance.

Typically, the parking base 10 is provided with a second groove 11 configured for accommodating the turning guide block 30 and the bicycle wheel, a bottom portion of the turning guide block 30 is transversely provided with a through hole 32, two side walls of a front end of the second groove 11 are transversely provided with a rotational shaft that passes through the through hole 32, and the turning guide block 30 is configured to turn about the rotational shaft. The turning guide block 30 turns about the rotational shaft and guides the bicycle wheel to the locking device 22 to get locked. During the entire process of pushing the bicycle to get locked and parked, the bicycle wheel is restrained in the first groove 31 to ensure that the bicycle wheel does not shake. Then continue to push the bicycle, the turning guide block 30 turns about the rotational shaft and guides the bicycle wheel to move to the locking device 22 to get locked, the entire process does not require manual adjustment, thereby easily achieving precise guidance.

The vertical post 20 includes a vertical rocker 21 rotatably connected to the parking base 10, the locking device 22 fixedly connected to an end of the rocker, and a pair of guide rollers 221 fixed above the locking device 22, an barrier belt 12 is transversely provided inside the second groove 11 to block the bicycle wheel, and a V-shaped recess is provided on an upper portion of the barrier belt 12. In the process of pushing the bicycle, the front of the bicycle wheel is in contact with the guide roller 221 and relative rolling occurs, while the vertical rocker 21 is pressed to swing. When the bottom of the bicycle wheel falls into the V-shaped recess in the barrier belt 12, the bicycle wheel is fixed, and the vertical rocker 21 stops to swing. Since the locking device 22 fixed to an upper end of the vertical rocker 21 follows to swing, the locking opening of the locking device 22 may be adjusted in real time with an angle of the bicycle wheel hub. Based on a size of the bicycle wheel and a parking position of the bicycle wheel, a rotation point and a rotation range of the vertical rocker 21, an initial angle at which the locking device 22 is fixed to the vertical rocker 21, etc. are designed to ensure that when the bicycle is fixed, the lock opening of the locking device 22 is substantially perpendicular to the bicycle wheel hub. When the lock opening of the locking device 22 is kept substantially perpendicular to the bicycle wheel hub, the lock opening of the locking device 22 will not be stuck on the steel wire of the bicycle wheel when the locking device 22 locks the bicycle wheel.

Typically, a front end of the parking base 10 is connected to an guide bridge 40 provided with a third groove 41, which has a center line that is coplanar with a center line of the first groove 31, the bicycle wheel is operative to be pushed into the first groove 31 via the third groove 41, an arc-shaped hook 42 is provided at an end of the guide bridge 40, the front end of the parking base 10 is provided with an arc-shaped channel 13 fitted with the arc-shaped hook 42, and an end of the arc-shaped hook 42 is embedded in the arc-shaped channel 13 to prevent the guide bridge 40 from detaching freely. This structural design and connection mode facilitates transportation and anti-theft. During transportation of the parking device, removing the guide bridge 40 may reduce the overall packaging size and facilitate the transportation. At a site of installation, the arc-shaped hook 42 of the guide bridge 40 may be inserted into the arc-shaped channel 13 and rotated to a basic level. Then the entire parking device is placed on the ground, a bottom portion of the guide bridge 40 is supported by the ground, and the guide bridge 40 cannot be taken out without lifting the entire parking device, thereby achieving a good anti-theft effect.

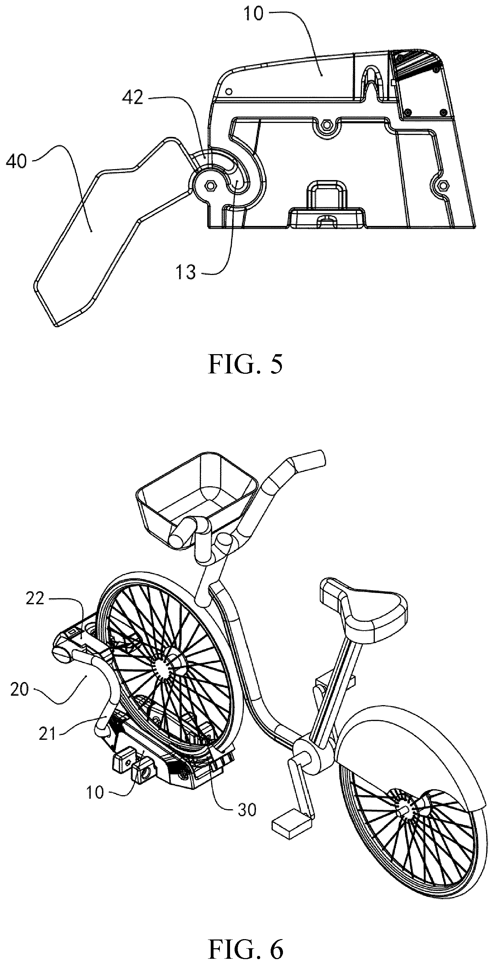

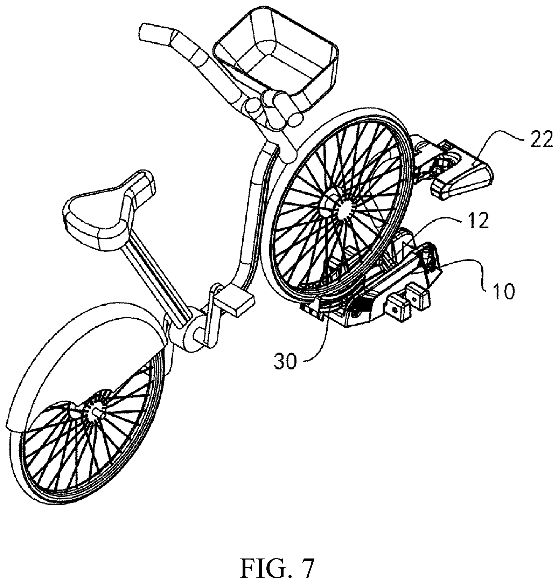

With reference to FIGS. 6 and 7, after the lock is unlocked, the bicycle wheel is pulled back, and the turning guide block 30 continues to follow the bicycle wheel to turn over to maintain a stable state of the bicycle wheel to the greatest extent. The user only needs to hold the bicycle with one hand, which is very convenient for the user. In a locked state, the turning guide block 30 also produces a resistance to the bicycle wheel to prevent backward movement, which effectively prevents the bicycle from falling due to autonomous backward movement.

Embodiments in accordance with the present invention have been described in detail above with reference to the drawings, but the present invention will not be limited to the above embodiments, and various changes can be made by those having ordinary skill in the art within their scope of knowledge without departing from the spirit of the present invention.

## Claims

1. A bicycle locking and parking device, comprising:
a parking base; and
a vertical post provided with a locking device and configured to lock a bicycle wheel;
wherein a front end of the parking base is rotatably connected to a turning guide block, the turning guide block being provided with a first groove configured for supporting the bicycle wheel and orienting the bicycle wheel towards the locking device.

2. The bicycle locking and parking device according to claim 1, wherein an opening width of the first groove is gradually decreased from top to bottom.

3. The bicycle locking and parking device according to claim 2, wherein the first groove has a V-shaped cross section.

4. The bicycle locking and parking device according to claim 1 or claim 3, wherein the first groove is a circular-arc-shaped groove.

5. The bicycle locking and parking device according to claim 4, wherein a circle of which the circular-arc-shaped groove is a part has a radius that is less than a radius of the bicycle wheel, and a side surface of a single side of the bicycle wheel and a side wall of a single side of the circular-arc-shaped groove are in close contact with each other at two places.

6. The bicycle locking and parking device according to claim 1 or claim 5, wherein a plurality of anti-slip strips are transversely arranged in the first groove and are spaced apart from each other.

7. The bicycle locking and parking device according to claim 1, wherein the parking base is provided with a second groove configured for accommodating the turning guide block and the bicycle wheel.

8. The bicycle locking and parking device according to claim 7, wherein a bottom of the turning guide block is transversely provided with a through hole, and two side walls of a front end of the second groove are transversely provided with a rotational shaft that passes through the through hole, and the turning guide block is operative to turn about the rotational shaft.

9. The bicycle locking and parking device according to claim 7, wherein a rear end of the second groove is transversely provided with a barrier belt configured for checking the bicycle wheel, and an upper portion of the barrier belt is provided with a V-shaped recess.

10. The bicycle locking and parking device according to claim 1, wherein the front end of the parking base is connected to a guide bridge provided with a third groove, wherein the third groove has a center line that is coplanar with a center line of the first groove, the bicycle wheel is operative to be pushed into the first groove via the third groove, an arc-shaped hook is provided at an end of the guide bridge, the front end of the parking base is provided with an arc-shaped channel fitted with the arc-shaped hook, and an end of the arc-shaped hook is embedded in the arc-shaped channel to prevent the guide bridge from detaching freely.
